(19) Europäisches Patentamt
European Patent Office
Office européen des brevets

(11) EP 0 972 799 A1

(12) EUROPEAN PATENT APPLICATION

(43) Date of publication:
**19.01.2000 Bulletin 2000/03**

(51) Int. Cl.⁷: **C08L 21/00**, C08K 5/36, C08K 3/36, B60C 1/00

(21) Application number: **99202287.1**

(22) Date of filing: **13.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **15.07.1998 EP 98830431**

(71) Applicant:
**PIRELLI PNEUMATICI Società per Azioni**
**20126 Milano (IT)**

(72) Inventors:
- **Garro, Luciano**
  **20060 Ornago (Milano) (IT)**
- **Serra, Antonio**
  **16138 Genova (IT)**

(74) Representative:
**Checcacci, Giorgio et al**
**Porta, Checcacci & Associati S.p.A.**
**Viale Sabotino 19/2**
**20135 Milano (IT)**

# (54) Vulcanizable rubber composition for treads of vehicle tires

(57) A vulcanizable rubber composition for treads of vehicle tires, comprises:

a) a cross-linkable unsaturated chain polymeric base including 1 to 40 phr of at least an unsaturated chain modified polymer including polar groups,

b) 15 to 100 phr of a silica-based reinforcing filler including superficial hydroxyl groups,

c) 0.5 to 5 parts by weight per each 100 parts by weight of said silica-based reinforcing filler of at least a sulfur-containing stabilizing agent of the vulcanization network,

d) an effective amount of at least one vulcanizing agent.

Advantageously, said rubber composition allows to obtain a tread with a reduced rolling resistance, a good wear resistance and a good wet-skid resistance, while reducing to a minimum the production problems associated to the use of silica as reinforcing filler.

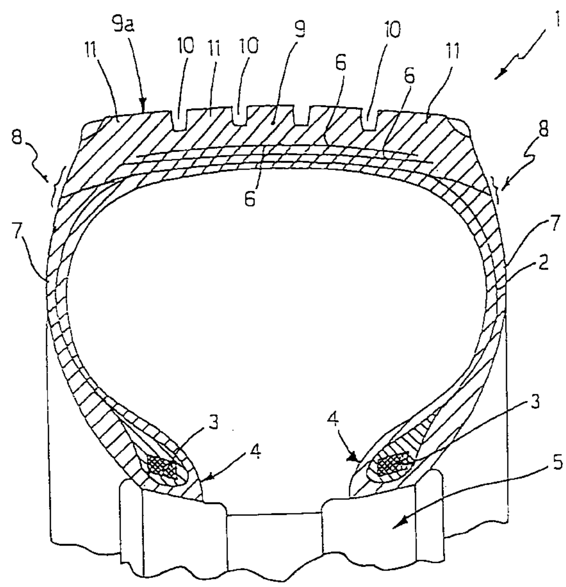


FIG. 1

EP 0 972 799 A1

## Description

Field of the invention

The present invention relates to a vulcanizable rubber composition of the type comprising a cross-linkable unsaturated chain polymeric base, which has a preferred, while not exclusive use, in the manufacture of treads for vehicle tires.

The invention also relates to a tread and a tire obtainable from the above rubber composition.

Known art

As is known, in the field of vehicle tire manufacture one of the more difficult objects to be reached has always been that of reducing the rolling resistance of the tire, achieving at the same time a good wear resistance and a satisfactory skid resistance on wet road.

The difficulties for achieving the aforementioned object essentially arise from the fact that the tire rolling resistance on the one hand and the wear resistance and wet skid resistance on the other hand, are affected in an entirely opposite manner by the amount of reinforcing filler, traditionally mainly constituted by carbon black, used in the rubber composition employed to manufacture the tire tread.

In order to reduce the rolling resistance of the tire, in fact, it would be desirable to reduce the amount of the carbon black-based reinforcing filler used in the rubber composition (for instance, below 70 parts every 100 parts by weight of the polymer base of the rubber composition): in so doing, however, a falling off to unacceptable values of both wet skid resistance and wear resistance of the tire has been observed.

In order to overcome somehow this limitation of the rubber compositions comprising carbon black as main reinforcing filler, the prior art has suggested to partly or fully replace the latter by the so-called "white" fillers, in particular silica, as is described for instance in European Patent application EP 0 501 227.

Even though silica-based reinforcing fillers have allowed to reduce the tire rolling resistance without significantly affecting wear resistance and wet skid resistance, their use is not devoid of drawbacks.

These reinforcing fillers, in fact, besides having a cost much higher than the cost of carbon black, have per se a poor affinity with the polymer base of the rubber compositions employed in the manufacture of tires and - as such - require the use of suitable coupling agents that may chemically bind silica to the polymer matrix.

Traditionally, the silica coupling agent prevailingly used is a silane-based one and is generally added in an amount exceeding 8-10% by weight based on the total weight of the silica used.

So, for instance, in U.S. patent no. 5.227.425 rubber compositions for treads having a low rolling resistance are described, which are produced by mixing a polymeric base with high amounts of silica as reinforcing agent, and a silane-based coupling agent.

In the same way, in European Patent application EP-A-0 447 066, rubber compositions for treads having a low rolling resistance are described wherein a basic component to chemically bind silica to the polymeric base is a silane-based coupling agent.

Also, in patent application JP 70-90123 rubber compositions for treads having a low rolling resistance, a good wear resistance and a good wet-skid resistance are described, including a silica-based reinforcing filler, a silane-based coupling agent and a polymeric base comprising natural rubber, a butadiene-styrene copolymer, and an epoxidated natural rubber having the function of increasing the hysteresis of the rubber composition as a whole.

As is known, the use of silane as silica coupling agent in the above amounts has several drawbacks.

Firstly, silane has so high a cost as to affect for up to 20% the overall cost of the rubber composition.

Secondly, it is necessary to verify much more carefully the temperature of the rubber composition during the various production steps thereof, since too high temperatures might trigger either a possible silane polymerization reaction, with a loss of this expensive material, and a possible reaction of the sulfur included therein with the polymeric chain, with ensuing rubber prevulcanization and an undesired viscosity increase.

In order to overcome the above drawbacks due to the use of silane as silica coupling agent, it was then suggested to use for some specific applications epoxidated polyisoprene as coupling agent between silica and the remainder of the polymeric base.

So, for instance, European Patent application 0 680 998 describes a rubber composition for the manufacture of particularly air-tight tire carcasses. Even though the use of epoxidated polyisoprene in such a type of rubber composition has allowed to eliminate the silane agent, the Applicant has found that a rubber composition of this type shows unsatisfactory results as concerns tire performance, in particular, as concerns abrasion resistance and road holding, when it is used for the manufacture of treads.

Summary of the invention

The technical problem underlying the present invention is therefore that of providing a rubber composition for treads including at least a silica-based reinforcing filler, which allows, on the one hand, to reduce the rolling resistance of the tire without affecting the wear resistance and wet skid resistance thereof, and is free, on the other hand, from the drawbacks complained with reference to the cited prior art.

According to the present invention, it has surprisingly been found that it is possible to solve the aforesaid problem in all its aspects by using a modified polymer including polar groups as coupling agent instead of silane, provided that the rubber composition includes a prefixed amount of a sulfur-containing stabilizing agent of the vulcanization network.

In fact, the Applicant has found that, even though the modified polymers including polar groups may replace the traditional silane-based silica coupling agents, their use in rubber compositions for treads is feasible, in terms of modulus and abrasion resistance, only if the rubber composition includes at least an agent suitable to stabilize the three-dimensional network formed after vulcanization.

In the following description and the subsequent claims, the term: sulfur-containing stabilizing agent, is used to indicate in particular a stabilizing agent suitable to form sulfur-based cross-links between the polymeric chains, comprising a statistical mean value not exceeding three sulfur atoms.

According to a first aspect, the invention therefore provides a vulcanizable rubber composition for treads of vehicle tires comprising:

a) a cross-linkable unsaturated chain polymeric base including 1 to 40 phr of at least an unsaturated chain modified polymer, including polar groups,

b) 15 to 100 phr of a silica-based reinforcing filler including superficial hydroxyl groups,

c) 0.5 to 5 parts by weight per each 100 parts by weight of said silica-based reinforcing filler of at least a sulfur-containing stabilizing agent of the vulcanization network,

d) an effective amount of at least one vulcanizing agent.

In the following description and in the subsequent claims, the term: cross-linkable unsaturated chain polymeric base, is used to indicate any non cross-linked polymer or polymer mixture, either natural or synthetic, capable of assuming all the chemical-physical and mechanical characteristics typical of elastomers as a result of cross-linking (vulcanization) with sulfur-based systems.

In the same way, in the following description and in the subsequent claims the term: cross-linkable unsaturated chain polymer, is used to indicate any non cross-linked polymer, either natural or synthetic, capable of assuming all the chemical-physical and mechanical characteristics typical of elastomers as a result of cross-linking (vulcanization) with sulfur-based systems.

In the same way, in the following description and in the subsequent claims the term: phr, is used to indicate the parts by weight of a given ingredient of the rubber composition per each 100 parts by weight of the polymeric base.

Preferably, the polymeric base of the invention comprises cross-linkable unsaturated chain polymers or copolymers obtained by polymerization of conjugated dienes and/or aliphatic or aromatic vinyl monomers.

More particularly, the aforesaid unsaturated chain polymers or copolymers are preferably selected from the group comprising: natural rubber, polybutadiene, polychloroprene, polyisoprene, optionally halogenated isoprene-butadiene copolymers, butadiene-acrylonitrile, styrene-butadiene and styrene-butadiene-isoprene terpolymers, obtained either in solution or in emulsion, and ethylene-propylene-diene terpolymers.

According to the invention, such polymers may be used either individually or in a mixture thereof, according to the characteristics to be imparted to the finished product.

According to the present invention, the polymeric base includes at least a cross-linkable unsaturated chain modified polymer including polar groups as agent capable of binding silica to the same polymeric base.

Preferably, the polar groups are present in a molar percentage between 5 and 50 mol% and may be selected from the group comprising: nitrilic, carboxylic, acrylic, epoxy, ketonic functional groups, and combinations thereof.

Still more preferably, the polar groups are present in a molar percentage between 10 and 30 mol%, and are such as not to impart to the rubber composition acidity or basicity characteristics.

Depending on the number of polar groups, the modified polymer preferably has a $T_g$ between -80°C and -20°C and, still more preferably, between -40°C and -20°C.

According to the present invention, the modified polymer may be selected from the group comprising: epoxidated unsaturated chain polymers, in particular epoxidated natural rubber (ENR), unsaturated chain polymers including

polar groups, in particular nitrile-butadiene rubber (NBR), butadiene-isoprene-acrylonitrile terpolymers (NIBR), carboxylated nitrile-butadiene rubber (XNBR), natural rubber comprising acrylate or methacrylate grafted groups, and mixtures thereof.

Preferably, the amount of modified polymer added to the rubber composition is such that the number of functional polar groups introduced is between 1 and 20 times the number of the superficial hydroxyl groups of silica. Still more preferably, the number of functional polar groups introduced is between 5 and 15 times the number of the superficial hydroxyl groups of silica.

Based on such correlation, it is therefore advantageous for the purposes of the present invention to incorporate in the rubber composition 1 to 40 phr, preferably 2 to 30 phr, still more preferably 4 to 20 phr, of modified polymer.

According to the invention and in order to obtain a low rolling resistance at the normal use temperatures of the tire (40-70°C), the rubber composition incorporates at least a silica-based reinforcing filler including superficial hydroxyl groups.

In the following description and in the subsequent claims, the term: silica-based reinforcing filler, is used to indicate a reinforcing agent based on silicon dioxide (silica), silicates, and mixtures thereof, having a surface area, as measured according to the BET method, between 80 and 220 $m^2/g$, preferably between 160 and 180 $m^2/g$.

Besides, the silica-based reinforced filler is preferably obtained by precipitation and comprises an average number of superficial hydroxyl groups equal to 4-6 groups/$nm^2$.

According to the present invention, it is advantageous to incorporate an amount of silica-based reinforcing filler between 15 and 100 phr, and still more preferably, between 30 and 70 phr, in the rubber composition.

When the rubber composition incorporates such an amount of silica, in fact, optimum results have been achieved in tires obtainable therefrom, in terms of mechanical characteristics and reduction in rolling resistance.

According to the invention and in order to obtain the desired characteristics of abrasion resistance of the tread, the rubber composition incorporates an amount between 0.5 and 5 parts by weight per each 100 parts by weight of silica of at least one sulfur-containing stabilizing agent of the vulcanization network.

In a preferred embodiment, the amount of sulfur-containing stabilizing agent is between 1 and 4 parts by weight per each 100 parts by weight of silica.

Preferably, such sulfur-containing stabilizing agent of the network is selected from the group comprising: sulfur-containing silane compounds, dithiodimorpholine, dithiocaprolactamdisulphide, and mixtures thereof.

In a preferred embodiment, the sulfur-containing stabilizing agent is a sulfur-containing silane compound having the following structural formula:

$$(R)_3\text{-Si-C}nH_{2n}X \quad \text{(I)}$$

wherein:

R is an alkyl or alkoxy group comprising 1 to 4 carbon atoms or a chlorine atom, n is an integer of from 1 to 6, and X is a mercapto group or a $S_mY$ group, wherein Y is $(R)_3$-Si-Cn$H_{2n}$-, wherein R and n are as defined above, or a group selected from the following functional groups:

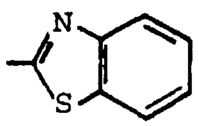
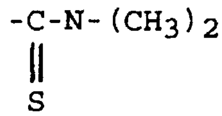
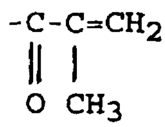

Still more preferably, the sulfur-containing silane compound has the following structural formula:

$$(C_2H_2O)_3\text{-Si-}(CH_2)_3\text{-S-S-S-S-}(CH_2)_3\text{-Si-}(C_2H_5O)_3 \quad \text{(II)}$$

The rubber composition is also rendered cross-linkable by adding and incorporating therein an effective amount of at least one suitable vulcanizing agent, possibly and preferably accompanied by suitable activators and vulcanization accelerators.

When the polymeric base is selected from the preferred cross-linkable unsaturated chain polymers, the vulcanizing agent of most advantageous use is sulfur or sulfur donors, with accelerators and activators well known to those skilled in the art.

According to a preferred embodiment of the present invention, it is advantageous add to the rubber composition 1 to 3 parts by weight of sulfur or sulfur donors per each 100 parts by weigh of silica, preferably 2 parts by weight.

Among the vulcanization activators, preferred is zinc stearate, directly formed in the rubber composition, by adding zinc oxide and stearic acid therein.

In order to satisfy specific application requirements, such as for instance to reduce the overall cost of the rubber composition and/or to obtain an adequate volume electrical resistivity of the tread such as not to cause undesired accumulations of electrostatic charges, the rubber composition of the invention may incorporate carbon black as second reinforcing filler.

According to the present invention, it may be advantageous add to the rubber composition 0 to 100 phr, preferably 0 to 40 phr of this second carbon black-based reinforcing filler.

Therefore, according to the present invention, it may be advantageous to add to the rubber composition a total amount of reinforcing filler (silica and carbon black) between 30 and 120 phr, preferably between 50 and 90 phr, still more preferably between 60 and 85 phr.

Conveniently, the rubber composition of the invention comprises the usual non cross-linking ingredients necessary to impart the necessary mechanical and processing characteristics to the rubber composition.

Such ingredients, known *per se*, are selected from the group comprising plasticizers, processing adjuvants, antioxidants, age-retarding agents, etc.

Besides, each of such ingredients is selected in the amount and proportions that can be easily determined by those skilled in the art in order to obtain optimum values of the aforesaid characteristics.

Solely by way of non limitative indication, a preferred rubber composition according to the invention is provided hereunder (parts expressed in phr):

| | |
|---|---|
| - unsaturated chain polymers | 80 - 96 |
| - modified polymer | 4 - 20 |
| - silica | 30 - 70 |
| - network stabilizing agent | 0.5 - 3 |
| - carbon black | 0 - 40 |
| - antioxidants | 1 - 3 |
| - anti-fatigue agents | 0.5 - 3 |
| - sulfur or donors thereof | 1 - 3 |
| - accelerators and activators | 6 - 8 |
| - plasticizers | 0 - 40 |

The aforementioned rubber composition may be obtained by means of quite conventional mixing operations, well known to those skilled in the art, which will be not described in detail.

According to a further aspect of the invention, a tread for vehicle tires is provided, in particular a premolded tread for covering worn tires, having a low rolling resistance, a good wear resistance, a good wet skid resistance and a adequate volume electrical resistivity, obtainable by forming and vulcanizing a vulcanizable rubber composition of the type described hereinabove.

Preferably, the tread of the invention is obtained by drawing, molding or calendering at a temperature of from 80 to 140°C.

According to a further aspect of the invention, a process is provided for the manufacture of tires for vehicle wheels comprising the steps of preparing around the circumference of a carcass a tread externally provided with a rolling surface, and of linking by vulcanization said carcass to said tread, characterized in that said tread is obtained from a vulcanizable rubber composition of the above described type.

According to a further aspect, the invention also relates to a tire for vehicle wheels whose tread shows a

reduced rolling resistance, a good wear resistance and a good wet skid resistance.

Quite surprisingly and as will be seen later on, tires prepared according to the process of the invention, subject to road tests and compared with tires fully identical but including a tread manufactured according to the prior art, have shown comparable or improved results together with a simplification and better controllability of the production process of preparing the rubber compositions as well as a reduction in costs.

Furthermore, the invention relates to a process for reducing the rolling resistance of tires, characterized in that the tire tread is obtained by submitting to forming and vulcanization a vulcanizable rubber composition of the above described type.

Brief description of the drawings

Additional characteristics and advantages of the invention will be more readily apparent from the following description of some examples of vulcanizable rubber compositions, treads and tires - made solely by way of non limitative indication - with reference to the attached drawings. In the drawings:

- Figure 1 shows a partly interrupted cross section of a tire according to the present invention,
- Figure 2 shows the vulcanization curves of a rubber composition according to the present invention and of two comparison rubber compositions.

Detailed description of the drawings

With reference to Figure 1, a tire 1 conventionally comprises at least one carcass ply 2 whose opposite side edges are externally bent around bead wires 3, incorporated each in a bead 4, defined along an internal circumferential edge of the tire, wherein the tire itself engages on a wheel rim 5 of a vehicle.

Along the circumferential development of the carcass ply 2 one or more belt strips 6 made of textile or metal cords incorporated into a rubber sheet are applied.

Externally to the carcass ply 2, in respective opposite side portion thereof, a couple of sidewalls 7 is applied, each of which extends from the bead 4 up to a so-called "shoulder" zone 8 of the tire, defined at the opposite ends of the belt strips 6.

Onto the belt strips 6 a tread 9 is circumferentially applied whose side edges end at the shoulders 8, joining with the sidewalls 7. The tread 9 has an external rolling surface 9a, designed to get in touch with the ground, wherein circumferential grooves 10 may be obtained, spaced by transversal grooves, not shown in the attached figure, which define a plurality of tread blocks 11 variously distributed along said rolling surface 9a.

The above described tire 1 may be manufactured by means of a process including a plurality of production steps, conventional in themselves and known in the art.

More particularly, such process comprises the steps of preliminarly and independently preparing several semi-finished products corresponding to the different parts of the tire (carcass plies, belt strips, bead wires, beads, fillings, sidewalls and treads) which are successively assembled to one another by a suitable assembling machine.

The subsequent vulcanization step then welds together the above semi-finished products to form a monolithic block, i.e. the tire.

Clearly, the step of preparing the above semi-finished products is preceded by a step of preparing and forming the corresponding rubber compositions.

In the tires of the invention, the tread 9 is produced by forming a vulcanizable rubber composition of the type described above.

In the following examples, solely given by way of non limitative indication, some formulations of rubber compositions according to the invention and some comparative tests which both the tires of the invention and conventional tires have been subjected to, will now be provided.

EXAMPLE 1

(Invention)

In a closed rotor mixer (Banbury) model 11D of the company POMINI, which has been caused to rotate at a speed of about 40 r.p.m., the following ingredients were loaded in sequence:

- E-SBR = butadiene-styrene copolymer prepared in emulsion, having a styrene content equal to 23.5% by weight, available on the market under the trade name Flexene® 1500 (Enichem Elastomeri);

- NBR = acrylonitrile-butadiene copolymer having an acrylonitrile content equal to 28 ± 1% by weight, available on the market under the name of Perbunan NT 2845 (Bayer);
- sulfur-containing stabilizing agent of the network = solid composition including 50% carbon black, 50% bis(triethoxysilyl-propyl)tetrasulphide, available on the market under the trade name of X50S (Degussa);
- silica = BET = 175 $m^2/g$, VN3 type (Degussa);
- carbon black = ASTM N234 type;
- age-retarding agent = 6PPD, also known as SANTOFLEX 13 (Monsanto);
- anti-fatigue agent = TMQ, also known as VULCANOX 4020 (Bayer);

The obtained rubber composition was loaded, after cooling at room temperature, in a closed rotor mixer (Banbury) model 11D of the company POMINI, which was caused to rotate at the speed of about 40 r.p.m. together with the following ingredients:

- sulfur;
- vulcanization accelerators [(diphenylguanidine DPG (Monsanto) and SANTOCURE CBS (Monsanto)].

The rubber composition was then submitted to intimate mixing, so as to disperse the vulcanizing system, taking care to keep the temperature of the composition below 120°C, to avoid a premature triggering of vulcanization.
After about 4 minutes, a vulcanizable rubber composition was obtained, having the ingredients shown in the following Table I (phr)

EXAMPLE 2

(Invention)

In accordance with the procedure described in preceding Example 1, a second rubber composition was prepared in which a different modified polymer according to the invention was used, the other ingredients being the same.
More particularly, an epoxidated natural rubber having an epoxidation degree of 25%, available on the market under the trade name ENR 25 (Guthrie Symington), was used.
The ingredients of the resulting rubber composition are shown in the following Table I.

EXAMPLE 3

(Comparison)

According to conventional procedures known *per se,* a first comparative rubber composition was prepared incorporating the same ingredients of the rubber composition of Example 1, except for the modified polymer including polar groups and for the sulfur-containing stabilizing agent of the network.
Further, the silane compound (X50S, Degussa) employed in this rubber composition has the only function of silica coupling agent and is used in the usual high amounts (20% by weight with respect to silica) taught by the prior art.
The ingredients of the resulting rubber composition are shown in the following Table I.

EXAMPLE 4

(Comparison)

According to conventional procedures known *per se*, a second comparative rubber composition was prepared including the same ingredients of the first comparative rubber composition (Example 3), except for the silica coupling agent (X50S).
The ingredients of the resulting rubber composition are shown in the following Table I.

EXAMPLE 5

(Comparison)

According to conventional procedures known *per se*, a third comparative rubber composition was prepared including the same ingredients of the first comparative rubber composition (Example 3), but with a reduced amount of silica coupling agent (X50S).

The ingredients of the resulting rubber composition are shown in the following Table I.

EXAMPLE 6

(Comparison)

According to the procedure described in the preceding Example 1, a fourth comparative rubber composition was prepared including the same ingredients of the first comparative rubber composition (Example 3), except for the presence of a modified polymer, in particular the epoxidated natural rubber ENR 25, and for the total absence of sulfur-containing stabilizing agents of the vulcanization network, as taught by European Patent application EP 0 680 998.

The ingredients of the resulting rubber composition are shown in the following Table I.

EXAMPLE 7

(Determination of the dynamic properties of the rubber composition)

A sample of each of the rubber compositions according to the preceding Examples 1-6 was submitted to vulcanization for 10' at 170°C, with methods and apparatuses known *per se*, and then to a number of tests in order to evaluate the dynamic properties of the same.

More particularly, the values of $\tan g\delta$ were determined, $\tan g\delta$ being defined as:

$$\mathrm{tang}\delta = E''/E'$$

wherein:

E'' = loss modulus [MPa];

E' = elasticity modulus [MPa];

with the experimental methods described hereafter and using commercially available apparatuses of the company INSTRON.

The values of the above parameters were determined by submitting a cylindrical test piece of vulcanized rubber having a length of 25 mm and a diameter of 14 mm, subjected precompressed up to a longitudinal deformation of 25% of its original height and kept at the prefixed temperature (0° or 70°C), to a dynamic sinusoidal deformation having a maximum width of ± 3.50% of the height under preloading, with a frequency of 10 cycles per second (10 Hz).

For the purposes of the present invention, it is intended that all the mentioned values of E', E'' and tangδ have been and should be measured according to the above described method.

The results of the tests carried out are reported in Table II, which shows the mean values measured on 4 tests of the loss modulus E'' (MPa), of the elasticity modulus E' (MPa) and, respectively, of tangδ (dimensionless) at the temperatures of 0° and 70°C.

By taking into account that - based on the tests carried out - the behavior of the tire on dry grounds results to be the better the higher are the values of the loss modulus E'' and the elasticity modulus E' measured at 70°C, that the wet skid resistance of the tire results to be the better the higher is the value of tangδ measured at 0°C, and that the rolling resistance results to be the lower, the lower is the value of tangδ measured at 70°C, it is easy to infer from the data reported in Table II that the rubber compositions of the invention (Examples 1-2) achieve:

a) improved behavior characteristics on dry grounds,

b) improved or at least acceptable wet skid characteristics,

c) improved rolling resistance characteristics,

with respect to the comparative rubber compositions (Examples 3-6).

From the data shown in Table II it may be also inferred that the comparative rubber composition obtained according to the teachings of European Patent application EP 0 680 998 (Example 6) would provide unacceptable performances if it is used as a constitutive element of a tread in terms of abrasion resistance, rolling resistance (high value of tang$\delta$ measured at 70°C) and, above all, behavior on dry grounds (low values of E' and E" observed at 70°C).

EXAMPLE 8

(Determination of the abradability characteristics of the rubber composition)

A sample of each of the rubber compositions according to preceding Examples 1-6 was submitted to vulcanization with methods and apparatuses known *per se*, and then to a number of tests in order to evaluate the abrasion characteristics of the same.
The tests were carried out according to the standards DIN 53516.
At the end of the abrasion tests, the amount of removed material, in $mm^3$, was measured for each tire.
In other words, the higher the abradability value of the test, the less the abrasion resistance of the rubber composition sample examined.
The results of the tests carried out are shown in Table III hereunder.
The examination of the data of said Table, indicating the volume of removed rubber composition in $mm^3$, shows that the compositions of the invention (Examples 1-2) have abradability characteristics fully comparable with those of the comparative rubber composition that used high amounts of silane coupling agent (Example 3) and improved abradability characteristics with respect to those of the rubber compositions without silane coupling agent (Examples 4 and 6) or having only a reduced amount of such ingredient (Example 5).
The rubber compositions of the invention therefore are suitable to satisfy the tighter abradability requirements required to a tread of a vehicle tire.

EXAMPLE 9

(Road behavior and rolling resistance)

Using the rubber compositions obtained according to the preceding example 2 (invention) and 3 (comparison), several treads were produced by drawing in conventional apparatuses, which treads were then assembled onto 205/60-15 size tires.
The tires so obtained were then submitted to several standard tests, in order to evaluate their road behavior and rolling resistance.

A. Evaluation of road behavior

This evaluation was carried out on the test track of Vizzola, mounting the tires onto cars model Lancia K 2400.
During the tests carried out, the performances of the tires obtained from the rubber composition of preceding Example 2 were compared with those observed on conventional comparative tires obtained from rubber composition of the preceding Example 3.
The tires were tested by independent test drivers who afterward assigned to the tires a rate from 0 to 10 for each of the following judgment parameters: wet skid behavior, dry ground behavior and driving comfort.
The results obtained, expressed as mean of the values obtained in five tests, of the evaluations expressed by the two test drivers, are shown in the following Table IV.
At the same time, during the tests carried out on the test track of Vizzola, the travel time in seconds of the track on wet ground was evaluated. Such parameter, also expressed as a mean of five different tests, is shown in the same Table IV.
As may be observed from such a Table, the tires of the invention (Example 2) have shown performances substantially equivalent to those of the tires manufactured according to the prior art.

B. Evaluation of rolling resistance

This evaluation was made on each tire according to the standards ISO 8767, and in particular according to the so-called "Torque Method" described in point 7.2.2 of the same, using conventional laboratory apparatuses.
The measurements were made at a constant speed of 80 km/h, while parasitic losses were measured according to the "Skim Reading" method described in point 6.6.1 of said standards ISO 8767.

The power losses measured using tires obtained from the rubber composition of Example 2 were compared with the power losses measured using tires obtained from the rubber composition of Example 3. Such values, expressed in Kg/1000Kg of load are shown in the following Table IV.

As may be observed from such a Table, the tires of the invention (Example 2) offered better performances with respect to the tires manufactured according to the prior art (Example 3).

From the entire set of the aforementioned tests, it was observed that, against a small reduction of the properties of road behavior on dry or wet ground, of such a magnitude as not to be perceived by users, an improvement in comfort and a reduction in rolling resistance - usually immediately felt by users - are obtained with the rubber composition of the invention.

Together with the evaluation of the results obtained from the road tests, it should also be taken into account either the costs reduction of the rubber composition obtained with the invention with respect to a rubber composition of the prior art, and the fact that, by ensuring a good road holding, average users are more sensitive to comfort and wear characteristics.

EXAMPLE 10

(Vulcanization characteristics)

A sample of each of the rubber compositions according to the preceding Examples 2-4 was submitted to a test in order to evaluate their vulcanization curves.

More particularly, the torque values to be applied to the rubber composition to obtain a certain deformation degree over time, was determined by using a Monsanto rheometer.

The test was carried out according to the standard ASTM D5289, at a temperature of 170°C.

The resulting curves are shown in Figure 2.

From the curves shown, it is possible to determine the parameter MH, i.e. the value of the maximum torque to be applied to the rubber composition at completion of vulcanization, which parameter is the higher the higher is the vulcanization extent and, along therewith, the mechanical characteristics of the rubber composition.

With special reference to the aforesaid figure, the comparative rubber composition of Example 4 quickly achieves the maximum torque value which however is not satisfactory as absolute value; the comparative rubber composition of Example 3, while reaching a higher value of maximum torque, shows markedly higher times for reaching such value; lastly, the rubber composition of the invention (Example 2) advantageously combines a high value of maximum torque and a comparatively short time for reaching such value.

TABLE I

| Ingredients | Ex. 1 | Ex. 2 | Ex. 3 | Ex. 4 | Ex. 5 | Ex. 6 |
|---|---|---|---|---|---|---|
| E-SBR | 92.50 | 92.50 | 100 | 100 | 100 | 92.50 |
| NBR | 7.50 | - | - | - | - | - |
| ENR 25 | - | 7.50 | - | - | - | 7.50 |
| $SiO_2$ | 35 | 35 | 35 | 35 | 35 | 35 |
| X50S | 2.40 | 2.40 | 7.00 | - | 2.40 | - |
| carbon black | 30 | 30 | 30 | 30 | 30 | 30 |
| antioxidants | 3 | 3 | 3 | 3 | 3 | 3 |
| anti-fatigue agents | 1 | 1 | 1 | 1 | 1 | 1 |
| plasticizers | 5 | 5 | 5 | 5 | 5 | 5 |
| sulfur | 1.60 | 1.60 | 1.00 | 1.00 | 1.60 | 1.60 |
| accelerators activators | 7.25 | 7.25 | 7.25 | 7.25 | 7.25 | 7.25 |

TABLE II

| Properties | Ex. 1 | Ex. 2 | Ex. 3 | Ex. 4 | Ex. 5 | Ex. 6 |
|---|---|---|---|---|---|---|
| E' 0°C | 13.224 | 13.38 | 15.40 | 11.46 | 14.03 | 11.79 |
| E' 70°C | 6.117 | 6.53 | 6.27 | 3.91 | 7.01 | 5.00 |
| E" 0°C | 5.876 | 4.60 | 6.26 | 4.60 | 6.18 | 5.03 |
| E" 70°C | 1.251 | 1.25 | 1.42 | 1.11 | 1.51 | 1.17 |
| tangδ 0°C | 0.444 | 0.344 | 0.406 | 0.402 | 0.440 | 0.427 |
| tangδ 70°C | 0.204 | 0.191 | 0.227 | 0.283 | 0.332 | 0.235 |

TABLE III

| Properties | Ex. 1 | Ex. 2 | Ex. 3 | Ex. 4 | Ex. 5 | Ex. 6 |
|---|---|---|---|---|---|---|
| Abradability DIN [$mm^3$] | 103.4 | 99.9 | 100.3 | 200.0 | 116.0 | 112.2 |

TABLE IV

| Road behavior | Ex. 2 | Ex. 3 |
|---|---|---|
| Wet ground, mean rating | 6.1 | 6.6 |
| Comfort, mean rating | 6.3 | 6.1 |
| Dry ground, mean rating | 6 | 6.7 |
| Wet ground, mean time (sec) | 106.3 | 106.2 |
| Rolling resistance (Kg/1000Kg of load) | 10.04 | 10.45 |

**Claims**

**1.** A vulcanizable rubber composition for treads of vehicle tires comprising:

a) a cross-linkable unsaturated chain polymeric base including 1 to 40 phr of at least an unsaturated chain modified polymer including polar groups,

b) 15 to 100 phr of a silica-based reinforcing filler including superficial hydroxyl groups,

c) 0.5 to 5 parts by weight per each 100 parts by weight of said silica-based reinforcing filler of at least a sulfur-containing stabilizing agent of the vulcanization network,

d) an effective amount of at least one vulcanizing agent.

**2.** Rubber composition according to claim 1, characterized in that said cross-linkable unsaturated chain polymeric base is selected from the group comprising: natural rubber, polybutadiene, polychloroprene, polyisoprene, optionally halogenated isoprene-butadiene copolymers, acrylonitrilebutadiene, styrene-butadiene and styrene-butadiene-isoprene terpolymers, obtained either in solution or in emulsion, and ethylene-propylene-diene terpolymers, and mixtures thereof.

**3.** Rubber composition according to claim 1, characterized in that said silica-based reinforcing filler is obtained by precipitation and has a BET surface area between 80 and 220 $m^2/g$, and an average number of superficial hydroxyl groups between 4 and 6 groups/$nm^2$.

**4.** Rubber composition according to claim 1, characterized in that said modified polymer is selected from the group comprising: epoxidated unsaturated chain polymers, unsaturated chain polymers including polar groups, and mixtures thereof.

**5.** Rubber composition according to claim 1, characterized in that the number of polar groups of said modified polymer is between 1 and 20 times the number of superficial hydroxyl groups of the silica-based reinforcing filler.

**6.** Rubber composition according to claim 1, characterized in that said sulfur-containing stabilizing agent of the vulcanization network is selected from the group comprising: sulfur-containing silane compounds, dithiodimorpholine, dithiocaprolactamdisulphide, and mixtures thereof.

**7.** Rubber composition according to claim 6, characterized in that said sulfur-containing stabilizing agent of the vulcanization network is a sulfur-containing silane compound having the following structural formula:

$$(R)_3\text{-Si-}C_nH_{2n}X \qquad \text{(I)}$$

wherein:

R is an alkyl or alkoxy group comprising 1 to 4 carbon atoms or a chlorine atom, n is an integer of from 1 to 6, and X is a mercapto group or a $S_mY$ group, wherein Y is $(R)_3$-Si-$C_nH_{2n}$-, wherein R and n are as defined above, or a group selected from the following functional groups:

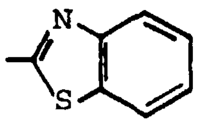
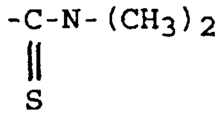
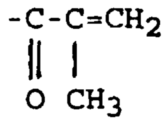

wherein m is an integer of from 1 to 6 and R is an alkyl or alkoxy group comprising 1 to 4 carbon atoms or a chlorine atom.

**8.** Rubber composition according to claim 1, characterized in that said at least one vulcanizing agent comprises sulfur or sulfur donors.

**9.** Rubber composition according to claim 1, characterized in that it comprises an amount between 0 and 100 phr of a second carbon black-based reinforcing filler.

**10.** Rubber composition according to claims 1 and 9, characterized in that the total amount of said silica-based and carbon black-based reinforcing fillers is between 30 and 120 phr.

**11.** A low rolling resistance tread for vehicle tires, obtainable by forming and vulcanizing a vulcanizable rubber composition according to anyone of claims 1-10.

**12.** Process for manufacturing a tire for vehicle wheels comprising the steps of preparing around the circumference of a carcass (2) a tread (9) externally provided with a rolling surface (9a) and of linking by vulcanization said carcass (9) to said tread (9), characterized in that said tread (9) is obtained by forming a vulcanizable rubber composition according to anyone of claims 1-10.

**13.** A tire (1) for vehicles, comprising a tread (9) including at least a silica-based reinforcing filler dispersed throughout a polymer base, circumferentially placed around a belt strip (6) and externally provided with a rolling surface (9a) suitable to get in touch with the ground,
characterized in that the tread (9) is obtained by forming and vulcanizing a vulcanizable rubber composition according to anyone of claims 1-10.

**14.** Process for reducing the rolling resistance of tires, said tires being provided with a tread (9) circumferentially placed around a belt strip (6), externally provided with a rolling surface (9a) suitable to get in touch with the ground, characterized in that said tire tread (9) is obtained by forming and vulcanizing a vulcanizable rubber composition according to anyone of claims 1-10.

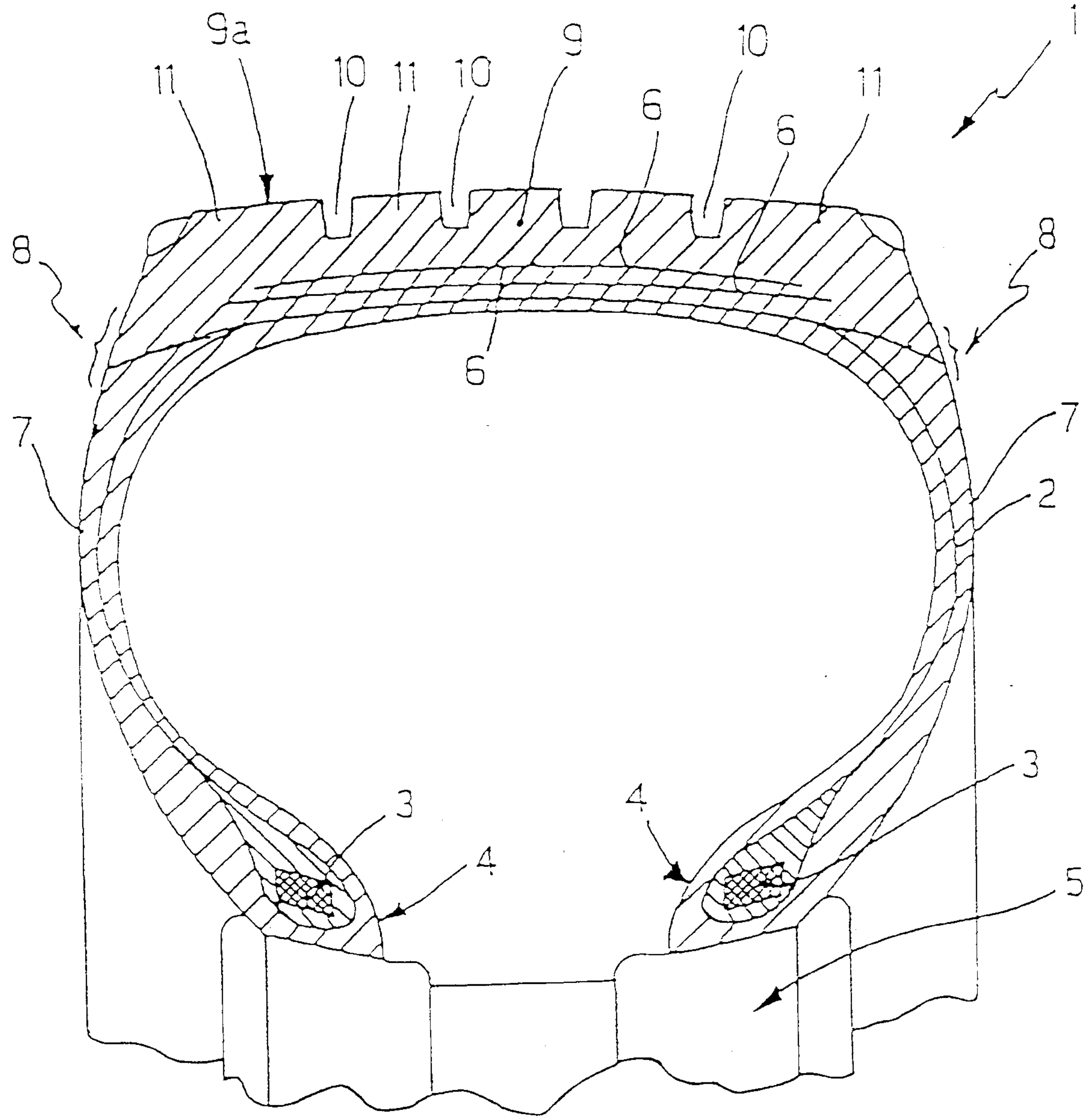


FIG. 1

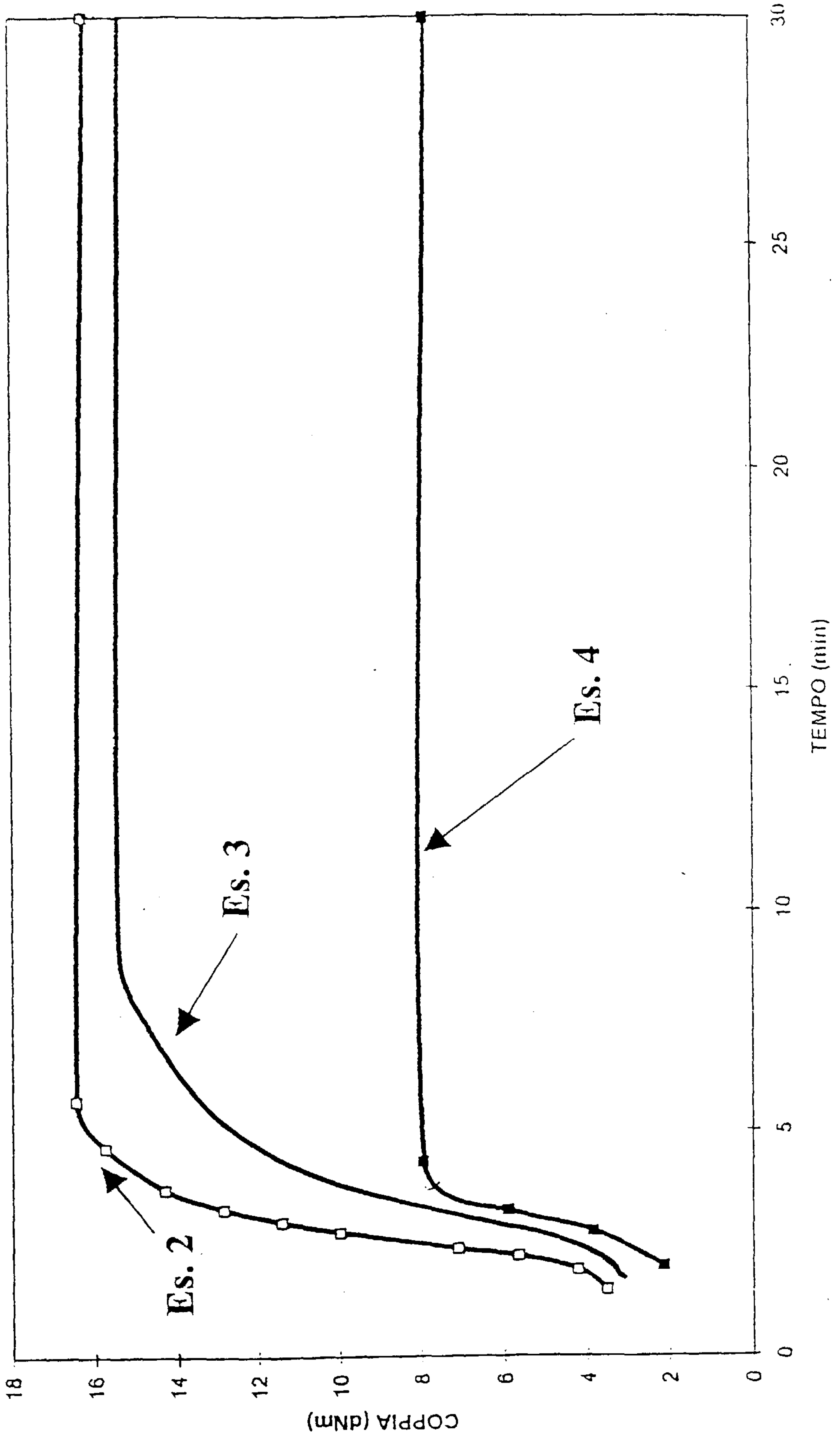
COPPIA (dNm)
0
2
4
6
8
10
12
14
16
18
TEMPO (min)
0
5
10
15
20
25
30
Es. 2
Es. 3
Es. 4

FIG. 2

European Patent Office

# EUROPEAN SEARCH REPORT

Application Number
EP 99 20 2287

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 704 481 A (GOODYEAR TIRE & RUBBER) 3 April 1996 (1996-04-03) * abstract; claims; table III * | 1-14 | C08L21/00 C08K5/36 C08K3/36 B60C1/00 |
| X | EP 0 644 235 A (GOODYEAR TIRE & RUBBER) 22 March 1995 (1995-03-22) * abstract; claims; tables * | 1-14 | |
| X | EP 0 735 085 A (GOODYEAR TIRE & RUBBER) 2 October 1996 (1996-10-02) * abstract; example 1; table 4 * * page 3, line 20 - line 35 * | 1-14 | |
| X | US 4 002 594 A (FETTERMAN MILES Q) 11 January 1977 (1977-01-11) * abstract; claims; table I * * column 4, line 44 - line 53 * | 1-14 | |

TECHNICAL FIELDS SEARCHED (Int.Cl.7)

C08K

The present search report has been drawn up for all claims

| Place of search | Date of completion of the search | Examiner |
|---|---|---|
| THE HAGUE | 5 October 1999 | Mettler, R-M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 20 2287

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-1999

| Patent document cited in search report | Publication date | Patent family member(s) | Publication date |
|---|---|---|---|
| EP 0704481 A | 03-04-1996 | US 5462979 A | 31-10-1995 |
| | | CA 2134833 A | 29-03-1996 |
| | | DE 69501303 D | 05-02-1998 |
| | | DE 69501303 T | 09-07-1998 |
| | | ES 2113152 T | 16-04-1998 |
| | | US 5489627 A | 06-02-1996 |
| | | US 5489628 A | 06-02-1996 |
| | | US 5488077 A | 30-01-1996 |
| EP 0644235 A | 22-03-1995 | US 5396940 A | 14-03-1995 |
| | | AU 670207 B | 04-07-1996 |
| | | AU 7304694 A | 30-03-1995 |
| | | BR 9403484 A | 16-05-1995 |
| | | CA 2112620 A | 18-03-1995 |
| | | DE 69408389 D | 12-03-1998 |
| | | DE 69408389 T | 03-09-1998 |
| | | ES 2113590 T | 01-05-1998 |
| | | JP 7149955 A | 13-06-1995 |
| EP 0735085 A | 02-10-1996 | BR 9601204 A | 06-01-1998 |
| | | CA 2154634 A | 01-10-1996 |
| | | JP 8283463 A | 29-10-1996 |
| US 4002594 A | 11-01-1977 | NONE | |

EPO FORM P0459

For more details about this annex : see Official Journal of the European Patent Office, No. 12/82